(19) Europäisches Patentamt
European Patent Office
Office européen des brevets

(11) Veröffentlichungsnummer: **0 030 310**
**B1**

# (12) EUROPÄISCHE PATENTSCHRIFT

(45) Veröffentlichungstag der Patentschrift: **28.03.84**

(51) Int. Cl.[3]: **B 29 C 1/04,** C 10 M 3/08, C 08 L 61/20

(21) Anmeldenummer: **80107303.2**

(22) Anmeldetag: **24.11.80**

## (54) Internes Trennmittel für hitzehärtbare Aminoplastharze, Verfahren zu seiner Herstellung und seine Verwendung.

(30) Priorität: **30.11.79 DE 2948184**

(43) Veröffentlichungstag der Anmeldung:
**17.06.81 Patentblatt 81/24**

(45) Bekanntmachung des Hinweises auf die Patenterteilung:
**28.03.84 Patentblatt 84/13**

(84) Benannte Vertragsstaaten:
**AT BE CH DE FR GB IT LI NL**

(56) Entgegenhaltungen:
**DE - A - 1 907 121**
**DE - A - 2 556 471**
**DE - B - 1 037 114**
**FR - A - 2 380 327**
**GB - A - 923 190**
**US - A - 2 272 847**
**US - A - 4 029 511**

(73) Patentinhaber: **CASSELLA Aktiengesellschaft, Hanauer Landstrasse 526, D-6000 Frankfurt am Main 61 (DE)**

(72) Erfinder: **Dörries, Peter, Hansa-Allee 80, D-6000 Frankfurt am Main 1 (DE)**
Erfinder: **Keil, Karl-Heinz, Dr., Konrad-Adenauer Strasse 26, D-6050 Offenbach/Main-Bieber (DE)**

(74) Vertreter: **Urbach, Hans-Georg, Dr. et al, Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Internes Trennmittel für hitzehärtbare Aminoplastharze, Verfahren zu seiner Herstellung und seine Verwendung

Die vorliegende Erfindung betrifft ein internes Trennmittel für Aminoplastharze bestehend aus einer wässrigen Lösung oder Dispersion von Phosphorsäureestern der Formeln Ia und Ib

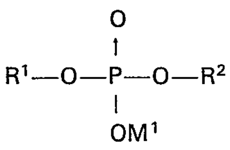

(Ia)

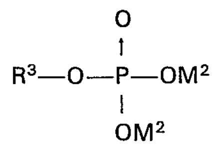

(Ib)

und Carbon- und/oder Sulfosäuresalzen der Formeln IIa oder IIb

$R^4—COOM^3$ (IIa) $R^4—SO_3M^3$ (IIb)

und/oder Schwefelsäurehalbestern von Hydroxycarbonamiden der Formel III

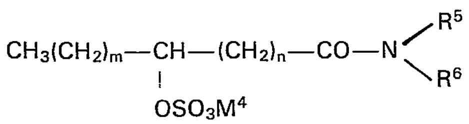

(III)

emulgatorstabilisierte Zubereitungen dieses Trennmittels, seine Herstellung und Verwendung.

In den Formeln Ia bis III bedeuten $R^1$, $R^2$ und $R^3$ unabhängig voneinander geradkettiges oder verzweigtes Alkyl oder Alkenyl mit 5 bis 12 C-Atomen oder Phenalkyl oder Naphtalkyl mit 7 - 13 C-Atomen, $R^4$ Alkyl mit 10 bis 22 C-Atomen, Alkylphenyl oder Alkylnaphthyl mit 1 bis 12 C-Atomen in der Alkylkette oder einen Rest der Formel IV

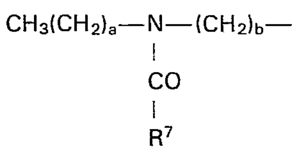

(IV)

worin a eine Zahl von 0 bis 2, b eine Zahl von 1 bis 3 ist und a + b eine Zahl von 1 bis 3 ergibt, $R^5$ Alkyl oder Alkenyl mit 1 bis 8 C-Atomen, Phenyl, Alkylphenyl oder Phenalkyl mit jeweils 1 bis 4 C-Atomen in der Alkylkette, $R^6$ Wasserstoff oder einen der für $R^5$ genannten Reste und $R^7$ Alkyl mit 11 bis 20 C-Atomen. $M^1$ bis $M^4$ sind gleich oder verschieden und bedeuten ein Alkalikation oder ein alkali-äquivalentes Kation. Eines der zwei Symbole $M^2$ bedeutet zusätzlich auch Wasserstoff und m und n sind unabhängig voneinander Zahlen von 6 bis 8.

Aminoplastharze im Sinne der folgenden Beschreibung sind mono- oder niedermolekulare Kondensationsprodukte sogenannter Aminoplastbildner, mit einer Carbonylverbindung und gegebenenfalls einem niederen Alkanol (vergl. Ullmanns Enzyklopädie der technischen Chemie, 4. Auflage, Band 7, (1974), Seite 403 - 424). Aminoplastbildner, die zur Herstellung von Aminoplastharzen in Betracht kommen, sind beispielsweise Melamin, Harnstoff, Dicyandiamid, Thioharnstoff, substituierte Melamine, Acetoguanamin, Butyroguanamin, Benzoguanamin und Äthylenharnstoff. In der Praxis bevorzugte Aminoplastharze werden erhalten unter Einsatz von Melamin und/oder Harnstoff als Aminoplastbildner.

Carbonylverbindungen, die für die Umsetzung mit obigen Aminoplastbildnern eingesetzt werden können, sind beispielsweise: Formaldehyd, Acetaldehyd, Isobutyraldehyd, Aceton, Methyläthylketon und Diäthylketon. In der Technik bevorzugt ist Formaldehyd. Die technisch wichtigsten Aminoplastharze werden somit erhalten durch Kondensation von Melamin und/oder Harnstoff mit Formaldehyd. Moderne Aminoplastharze werden häufig durch Einkondensieren oder durch nachträglichen Zusatz von Modifizierungsmitteln zur Herbeiführung technisch besonders wertvoller Eigenschaften modifiziert. Bekannte Modifizierungsmittel sind beispielsweise: o-p-Toluolsulfonamid, Amidosulfonsäure und ihre Salze, ε-Caprolactam, Glucose, Sorbit, Glykol, Diglykol, Pentaerythrit, Saccharose, Methylenbisformamid, Methylenbisacetamid, Carbamate wie z.B. Methylcarbamat, Methoxyäthylcarbamat und Salze der Malein- bzw. Fumaramidsäure.

Bei der Herstellung der Aminoplastharze wird die Kondensation zwischen den Aminoplastbildnern und den Carbonylverbindungen nur so weit getrieben, dass die Produkte noch löslich und schmelzbar bleiben. Die Kondensationsreaktion wird daher rechtzeitig abgebrochen, z.B. durch Abkühlen oder durch Einstellen eines schwach alkalischen pH-Wertes der Reaktionsmischung. Die so hergestellten Aminoplastharze (gelegentlich auch Aminoplastvorkondensate genannt) werden in Form ihrer wässrigen Lösungen insbesondere als Tränkharze für die Schichtpressstoffindustrie und zur Oberflächenveredelung von Spanplatten und anderen Holzwerkstoffen sowie zur Herstellung von Pressmassen benutzt. Bei der Verarbeitung der Aminoplastharze werden dieselben in Kombination mit Füll- oder Trägerstoffen unter Druck und bei erhöhter Temperatur gepresst. Bei dieser Operation tritt häufig eine Schwierigkeit auf, die darin besteht, dass das gepresste Erzeugnis sich schwierig aus der Presse entnehmen lässt, weil es zu Verklebungen zwischen der Oberfläche des Presskörpers und dem Presswerkzeug kommt. Im Detail sei diese Erscheinung am Beispiel der Herstellung von plattenförmigen Presserzeugnissen beschrieben.

Saugfähige Trägermaterialien wie Papier und Gewebebahnen werden mit Aminoplasttränkharzen, vornehmlich Melaminformaldehyd- und Melamin-harnstoff-formaldehyd-Vorkondensaten, imprägniert und vorsichtig bis zur Klebfreiheit getrocknet. Die auf diese Art vorbehandelten Trägerstoffe werden dann in hydraulischen Pressen unter Druck- und Temperatureinwirkung auf Holzspan- oder Holzfaserhartplatten aufgebracht oder zu dekorativen Schichtpressstoffen verarbeitet. Beim Pressvorgang werden die imprägnierten Trägerbahnen gegen ein Pressblech gepresst, wobei das fliessende und aushärtende Aminoplastvorkondensat die Oberfläche des Pressblechs spiegelbildlich als Endprodukt des Vergütungsvorgangs darstellt. Als Pressbleche werden in allgemeinen hartverchromte Messing- oder Stahlbleche eingesetzt. Um zu reproduzierbaren Oberflächen zu kommen, müssen zwei Voraussetzungen erfüllt sein: das fliessende Harz muss die Oberfläche des Pressblechs exakt abbilden. Dies hängt unter anderem von dem Kondensationsgrad des Tränk- und/oder Beschichtungsharzes, den Fluss des Harzes regelnden Modifizierungsmitteln und von der Art des Härters ab. Eine weitere Voraussetzung besteht darin, dass sich die Oberfläche des Pressblechs während der Betriebszeit nicht ändert. Sehr häufig wird nun die Beobachtung gemacht, dass sich besonders auf der Oberfläche von mattverchromten oder strukturierten Pressblechen Harzrückstände aufbauen, die zu unerwünschten Klebeerscheinungen zwischen imprägniertem Papier und Pressblech führen. Diese Rückstandsbildung ist sehr schwer zu beherrschen, insbesondere deshalb, weil sie mitunter verstärkt, zuweilen schwächeren und manchmal gar nicht oder erst nach sehr langen Betriebsperioden auftritt. Die Belagbildung am Pressblech ist unabhängig von Presstemperatur und Presszeit, d.h. von der Aushärtung der Kunstharzfläche. Bei Unterhärtung tritt sie vorzeitig auf, da sich beim Heissentformen offenbar Harzpartikel von der Kunstharzfläche loslösen und am Pressblech adhärieren. Weiterhin tritt eine beschleunigte Belagbildung auf bei zu hohem Fluss des Harzes, insbesondere durch zu geringen Kondensationsgrad des Harzes bzw. zu hoher Darrfeuchte der Kunstharzfilme. Damit wird der ohnehin geringe Toleranzbereich im Kondensationsgrad weiter eingeengt. Die Belagbildung an den Pressblechen und die damit verbundene Klebneigung der Formkörper an den Pressblechen führt zu erheblichen Schwierigkeiten bei der Entformung mit der Folge, dass die Oberflächen des Formkörpers verletzt werden oder dass sich die Unreinheiten des Pressblechs auf denselben abbilden. Werkstücke mit derartig beschädigten Oberflächen können aber nicht mehr verkauft werden und verteuern somit die Produktion ganz erheblich. Zur Vermeidung dieses Ausschusses war es daher erforderlich, jede Belagbildung, die an den Pressblechen auftrat, so häufig wie möglich zu beseitigen oder zumindest die Klebneigung zwischen Pressblech und Presskörper zu verringern. Hierfür waren folgende Verfahren üblich:

1. Die Blechoberflächen wurden mit Rückstand lösenden Detergentienlösungen oder auch mit milden mechanisch wirkenden Reinigungsmitteln abgewaschen. Hierbei ist jedoch zu beachten, dass dies zu chemischen und auch mechanischen Beschädigungen der Pressblechoberflächen führen kann.

2. Die Pressbleche wurden durch eine sogenannte Reinigungspressung mit speziell imprägnierten Papieren gesäubert. Da bei dieser Arbeitsweise relativ lange Presszeiten eingehalten werden müssen und das hergestellte Laminat verworfen wird, ist diese Methode überaus kostspielig.

3. Durch Aufsprühen von Trennmitteln auf die Pressblechoberfläche versuchte man, einen Antihafteffekt zu erzielen. Auch diese Arbeitsweise kann nicht als optimal angesehen werden, da es bei dekorativen Beschichtungen häufig zu ungleichmässiger Glanzausbildung kommt.

Die genannten Erschwernisse der Pressverfahren haben auch bereits zu Versuchen geführt, den Harzen selbst spezielle Trennmittel zuzusetzen, die die Klebneigung der Werkstücke an den Presswerkzeugen herabsetzen. Entsprechende Hinweise finden sich beispielsweise in «Römpp Chemielexikon» 7. Auflage (1977), Band 6, Seite 3654 sowie «Kirk-Othmer» 2. Auflage, Band 1, Seiten 1 bis 11. Die bekannten internen Trennmittel wurden in erster Linie für die Verarbeitung von thermoplastichen Materialien, wie Polystyrol, Polyamid, Polyäthylen oder Polyvinylchlorid, und auf dem Gebiet der hitzehärtbaren Polymere bei der Herstellung geformter Gebilde aus hitzehärtenden Polyestern und Polyepoxyden eingesetzt. Die für diese Zwecke benutzen Substanzklassen, vorwiegend Derivate langkettiger Alkancarbonsäuren, z.B. Wachse, Stearinsäure und deren Salze sowie Paraffinkohlenwasserstoffe, gegebenenfalls in Form von Emulsionen, waren jedoch als Formtrennmittel für die hier in Rede stehenden Aminoplastvorkondensate schon aus Gründen der völlig unterschiedlichen physikalischen und physikochemischen Beschaffenheit der gegenüberstehenden Materialien wenig geeignet oder unbrauchbar.

Bei der Herstellung von Formpresskörpern auf der Basis von Aminoplastpressmassen ist es üblich, sogenannte Gleitmittel zuzusetzen, die gleichzeitig die Trennung des Presslings vom Presswerkzeug erleichtern (Ullmann, Enzyklopädie der technischen Chemie, Band 14, Seite 366, sowie Kunststoffhandbuch, R. Vieweg und E. Becker, Band 10 (Duroplaste), Seite 346). Die hierbei verwendeten Mittel waren vorwiegend Stearinsäure, Stearate und Palmitate des Zinks, Magnesiums, Calciums sowie synthetische und natürliche Wachse. Für spezielle Zwecke wurde auch hochsulfoniertes Ricinusöl eingesetzt (Transaction of the Plastics Institut, Band 46 (1953) Seite 11). Aus den US-Patentschriften 2 250 746 und 2 250 747 (1947) ist ferner der Zusatz von langkettigen Amiden der Stearinsäure zu Aminoplastharz-Pressmassen als Gleit- und Trennmittel bekannt. Diese bekannten Trennmittel zeigen jedoch insbesondere beim Einsatz in wässrigen Tränkharzsystemen eine zu geringe Wirksamkeit, und bei den dadurch häufig erforderlichen hohen Zusatzmengen einen nachteiligen Einfluss auf die Oberflächen der Presslinge, wie matte Flecken infolge ungleichmässiger Verteilung der Hilfsmittel und Ausschwitzen der zugesetzten Mittel an der Oberfläche der Formlinge. Ferner entsprechen sie bezüglich anderer anwendungstechnischer Eigenschaften, wie Verträglichkeit mit verschiedenen Harztypen und Lagerfähigkeit, sowie auch hinsichtlich ihres Preises noch nicht den Anforderungen der Praxis.

Die vorliegende Erfindung betrifft nun ein Trennmittel für Aminoplastharze, welches den bisher bekannten Produkten wesentlich überlegen ist. Es besteht aus einer wässrigen Lösung oder Dispersion enthaltend

a) 5 - 30 Gew.-%, vorzugsweise 10 - 15 Gew.-%, eines Gemisches aus 50 - 100 Gew.-% einer

Verbindung der allgemeinen Formel Ia

$$R^1{-}O{-}\overset{\overset{\displaystyle O}{\uparrow}}{\underset{\underset{\displaystyle OM^1}{|}}{P}}{-}O{-}R^2 \qquad \text{(Ia) und}$$

0 bis 50 Gew.-% einer Verbindung der allgemeinen Formel Ib

$$R^3{-}O{-}\overset{\overset{\displaystyle O}{\uparrow}}{\underset{\underset{\displaystyle OM^2}{|}}{P}}{-}OM^2 \qquad \text{(Ib) und}$$

b) 2 - 15 Gew.-% einer Verbindung der allgemeinen Formel IIa und/oder IIb

$R^4{-}COOM^3$ (IIa); $R^4{-}SO_3M^3$ (IIb) und/oder

c) 0,5 bis 10 Gew.-% einer Verbindung der allgemeinen Formel III

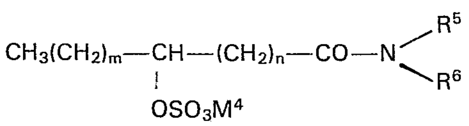 (III)

wobei in den Formeln I bis III
$R^1$, $R^2$ und $R^3$ unabhängig voneinander geradkettiges oder verzweigtes Alkyl oder Alkenyl mit 5 bis 12 C-Atomen oder Phenalkyl oder Naphtalkyl mit 7 bis 13 C-Atomen, $R^4$ Alkyl mit 10 bis 22 C-Atomen, Alkylphenyl oder Alkylnaphthyl mit 1 bis 12 C-Atomen in der Alkylkette oder ein Rest der Formel IV

$$CH_3(CH_2)_a{-}\underset{\underset{\underset{\displaystyle R^7}{|}}{\underset{\displaystyle CO}{|}}}{N}{-}(CH_2)_b{-} \qquad \text{(IV)}$$

worin a eine Zahl von 0 bis 2, b eine Zahl von 1 bis 3 ist und a + b eine Zahl von 1 bis 3 ergibt, $R^5$ Alkyl oder Alkenyl mit 1 bis 8 C-Atomen, Phenyl, Alkylphenyl oder Phenalkyl mit jeweils 1 bis 4 C-Atomen in der Alkylkette, $R^6$ Wasserstoff oder einen der für $R^5$ genannten Reste und $R^7$ Alkyl mit 11 bis 20 C-Atomen, $M^1$ bis $M^4$ gleich oder verschieden sind und ein Alkalikation oder ein alkaliäquivalentes Kation bedeuten, eines der zwei Symbole $M^2$ zusätzlich auch Wasserstoff bedeutet und m und n unabhängig voneinander Zahlen von 6 bis 8 sind.

Die erfindungsgemässen internen Trennmittel enthalten neben dem Hauptwirkstoff, den Phosphorsäureestern der allgemeinen Formeln Ia und Ib noch entweder Verbindungen der allgemeinen Formeln IIa und/oder IIb oder eine Verbindung der allgemeinen Formel III, oder sie enthalten sowohl Verbindungen der Formeln IIa bzw. IIb als auch solche der Formel III.

Das Zusammenwirken dieser Bestandteile verleiht den erfindungsgemässen Mitteln besonders vorteilhafte anwendungstechnische Eigenschaften und vergrössert ihre Anwendungsbreite.

Bevorzugte erfindungsgemässe Trennmittel enthalten 10 bis 15 Gew.-% eines Gemisches aus den Verbindungen der Formeln Ia und Ib und, sofern sie Verbindungen der allgemeinen Formeln IIa bzw. IIb enthalten, 5 bis 10 Gew.-% derselben und, sofern sie Verbindungen der allgemeinen Formel III enthalten, 0,5 bis 5 Gew.-% davon.

Für $R^1$, $R^2$ und $R^3$ stehende Alkyl- oder Alkenylreste kommen die normalen oder isomeren Reste Pentyl, Hexyl, Heptyl, Octyl, Nonyl, Decyl, Undecyl und Dodecyl, Pentenyl, Hexenyl, Heptenyl, Octenyl, Nonenyl, Decenyl, Undecenyl und Dodecenyl in Betracht. Phenalkyl oder Naphtalkyl mit 7 bis 13 C-Atomen, die für $R^1$, $R^2$ und $R^3$ stehen können, sind: Benzyl, Phenäthyl, Phenpropyl, Phenbutyl, Phenpentyl, Phenhexyl und Phenheptyl, Naphthylmethyl, Naphthyläthyl und Naphthylpropyl. Bevorzugt für $R^1$, $R^2$ und $R^3$ sind unverzweigte Alkylreste mit maximal I Verzweigung sowie Benzyl, Phenäthyl, Phenpropyl, Naphthylmethyl und Naphthyläthyl.

Für $R^4$ stehende Alkylreste mit 10 - 22 C-Atomen sind der Decyl-, Undecyl-, Dodecyl-, Tridecyl-, Tetradecyl-, Pentadecyl-, Hexadecyl-, Heptadecyl-, Octadecyl-, Nonadecyl-, Eicosyl-, Heneicosyl-, Docosyl-Rest, wobei die Reste mit 14, 16 und 18 C-Atomen bevorzugt sind. Bevorzugt als Bestandteile der erfindungsgemässen Trennmittel sind auch solche Verbindungen der Formel III, in denen $R^4$ ein Alkylgemisch natürlicher Zusammensetzung, wie beispielsweise natürliches Stearyl, Talgfettalkyl oder Palmkernalkyl ist. $R^4$ kann auch ein Rest der Formel IV sein,

$$CH_3(CH_2)_a{-}\underset{\underset{\underset{\displaystyle R^7}{|}}{\underset{\displaystyle CO}{|}}}{N}{-}(CH_2)_b{-} \qquad \text{(IV)}$$

das heisst, ein Alkylrest mit 2 - 4 C-Atomen, dessen Kette durch eine Gruppe $NCOR^7$ unterbrochen ist. In diesem Fall bedeutet $R^7$ Alkyl mit 11 - 20 C-Atomen, wobei Alkylreste mit 13, 15 und 17 C-Atomen sowie die natürlich vorkommenden obengenannten Alkylgemische bevorzugt sind.

$R^5$ bedeutet Alkyl oder Alkenyl mit 1 bis 8, vorzugsweise 1 bis 4 C-Atomen, Phenyl, Alkylphenyl oder Phenalkyl mit jeweils 1 bis 4 C-Atomen in der Alkylkette.

Beispiele für Alkylreste, für die $R^5$ stehen kann, sind Methyl, Äthyl, Propyl, Isopropyl, Butyl-1, Butyl-2, Isobutyl, tert.-Butyl, Pentyl, Hexyl, Heptyl, Octyl, Isooctyl. Beispiele für Alkenylreste, die für $R^5$ stehen können, sind Vinyl, Allyl, Methallyl, Crotyl.

Bevorzugt für $R^5$ sind Alkylreste mit 1 - 4 C-Atomen und Alkenylreste mit 3 oder 4 C-Atomen. $R^6$ hat die gleichen Bedeutungen wie $R^5$, kann aber zusätzlich ein Wasserstoffatom sein.

$R^7$ steht für einen Alkylrest mit 11 - 20 C-Atomen. Beispiele für derartige Alkylreste sind der Undecyl-, Dodecyl-, Tridecyl-, Tetradecyl-, Pentadecyl-, Hexadecyl-, Heptadecyl-, Octadecyl-, Nonadecyl-, Eicosyl-Rest, wobei die Reste mit 14, 16 und 18 C-Atomen bevorzugt sind.

Bevorzugt für $R^7$ sind ferner Alkylgemische natür-

licher Zusammensetzung, wie beispielsweise natürliches Stearyl, Talgfettalkyl oder Palmkernalkyl.

Die Symbole $M^1$ bis $M^4$ stehen für Alkali-Kationen oder für alkaliäquivalente Kationen. Alkali-Kationen sind beispielsweise das Lithium-, Natrium-, Kalium-Kation; alkaliäquivalente Kationen sind beispielsweise die Protonenaddukte an Ammoniak und organische Amine, wobei als organische Amine Hydroxyalkylamine, wie z.B. Mono-, Di- und Triäthanolamin, und cyclische Amine, wie z.B. Pyrrolidin, Piperidin, vorzugsweise Morpholin, in Betracht kommen.

a ist eine Zahl von 0 bis 2, b eine Zahl von 1 bis 3, a und b werden so gewählt, dass ihre Summe eine Zahl von 1 bis 3 ergibt.

m und n sind unabhängig voneinander Zahlen von 6 bis 8. Bevorzugt als Bestandteile der erfindungsgemässen internen Trennmittel sind solche Verbindungen der allgemeinen Formel III, bei denen die für m und n stehenden Zahlen die Summe 15 ergeben.

Neben der hervorragenden Wirksamkeit weisen die erfindungsgemässen Trennmittel eine technisch ausserordentlich vorteilhafte Verträglichkeit mit Aminoplastharzen auf, auch wenn diese die unterschiedlichsten bekannten Modifizierungsmittel enthalten. Ausgezeichnete Verträglichkeit besteht auch zwischen den erfindungsgemässen Trennmitteln und bekannten Emulgatoren. Diese Eigenschaft kann sehr vorteilhaft dazu ausgenützt werden, die Stabilität von Harz-Trennmittel-Zubereitungen sowohl bei den bei der Herstellung der Harze gegebenen hohen Harzkonzentrationen als auch bei den im anwendungsfertigen Tränkbad vorliegenden niedrigeren Harzkonzentrationen wesentlich zu erhöhen. Man ist dadurch in der Lage, bereits unmittelbar nach der Herstellung, vor dem Versand der Tränkharze, Trennmittel und Emulgatoren zuzusetzen, so dass der Anwender keinerlei Probleme mehr mit der Herstellung der Tränkflotten hat. Besonders vorteilhafte Emulgatoren für die erfindungsgemässe Anwendung sind solche der Formel V

$$B{-}(OCH_2{-}\underset{\underset{R^8}{|}}{CH})_p{-}OH \qquad (V)$$

Darin bedeutet B Alkylphenyl mit 9 - 18 C-Atomen in den Alkylresten, Naphthyl, Hydroxydiphenyl oder Benzyl- oder Phenäthyldiphenyl. $R^8$ steht für Wasserstoff oder Methyl und p ist eine Zahl von 5 bis 25. Vorzugsweise ist B 4-Nonylphenyl, 2,4-Dinonylphenyl, 2,4,6-Tri-n-butylphenyl, 2,4,6-Tri-iso-butylphenyl, 2,4,6-Tri-tert.-butylphenyl, 4-Dodecylphenyl, Naphthyl, 2'-Phenäthyldiphenyl, 2'-Benzyldiphenyl und 4'-Benzyldiphenyl und p ist eine Zahl von 5 bis 15.

Die Verbindungen der allgemeinen Formel Ia sind Salze der o-Phosphorsäure-di-alkylester, und die Verbindungen der allgemeinen Formel Ib sind Salze der o-Phosphorsäure-mono-alkylester. Wie bereits oben angegeben, liegt der Anteil des Gemisches an Verbindungen der Formel Ia zwischen 50 und 100 Gewichtsprozent, vorzugsweise bei 60 bis 80 Gewichtsprozent. Von besonderem Vorteil ist es hierbei, dass als Gemische der Formel Ia und Ib rohe technische o-Phosphorsäureester-Gemische verwendet werden können, die mindestens 50% des Diesters enthalten. Bevorzugt zur Herstellung der erfindungsgemässen Trennmittel sind dabei solche technischen Phosphorsäureester, bei denen $R^1 = R^2 = R^3$ und $M^1 = M^2$ ist. Diese technischen Produkte können auch noch bis zu 15 Gewichtsprozent des für die Veresterung benutzten Alkanols $R^1OH$ enthalten, was für die Herstellung der erfindungsgemässen internen Trennmittel nicht stört.

Sollen die erfindungsgemässen internen Trennmittel den Aminoplast-Tränkharzen erst beim Verarbeiter zugegeben werden, so ist es sehr zweckmässig und vereinfacht die Anwendung ausserordentlich, wenn die internen Trennmittel mit den Wirkstoffen a), b) und gegebenenfalls c) von vornherein mit dem Emulgator, vorzugsweise einem solchen der Formel V, kombiniert werden. Derartige Trennmittel-Zubereitungen weisen eine hervorragende Beständigkeit auf und sind ausserordentlich einfach in dem Aminoplastharz zu verteilen.

Auf Grund der besonders hohen Wirksamkeit der erfindungsgemässen Trennmittel sind in der Regel 0,05 bis 2,5 Gew.-%, bezogen auf eine 40 bis 50%ige Tränkharzlösung, völlig ausreichend, um eine einwandfreie Trennung von Pressling und Presswerkzeug zu gewährleisten. Normalerweise, d.h. bei normal klebenden Harzen, bewegen sich die Zusatzmengen des erfindungsgemässen Mittels vorwiegend im unteren Teil des angegebenen Bereichs, nämlich zwischen 0,05 und 0,5 Gew.-%. Selbst in stark zum Kleben neigenden Harzen, bei denen Zusatzmengen im oberen Teil des angegebenen Bereichs verwendet werden, wird auf Grund der hervorragenden Stabilität der erfindungsgemässen Trennmittel in der Tränkflotte und der hervorragenden gleichmässigen Verteilung keine Beeinträchtigung der Presslinge durch Ungleichmässigkeiten der Oberfläche beobachtet. Insbesondere in bezug auf diese Aspekte, nämlich hohe Wirksamkeit, d.h. niedrige Anwendungskonzentrationen im Normalfall, und hervorragende Verträglichkeit für den Fall, dass höhere Trennmittelkonzentrationen erforderlich werden, sind die erfindungsgemässen internen Trennmittel den bisher bekannten Produkten erheblich überlegen.

Zur Herstellung von je 100 Gewichtsteilen des erfindungsgemässen internen Trennmittels werden
a) 5 - 30 Gewichtsteile, vorzugsweise 10 - 15 Gewichtsteile eines Gemisches aus 50 - 100 Gew.-% einer Verbindung der allgemeinen Formel Ia

$$R^1{-}O{-}\overset{\overset{O}{\uparrow}}{\underset{\underset{OM^1}{|}}{P}}{-}O{-}R^2 \qquad \text{(Ia) und}$$

0 bis 50 Gew.-% einer Verbindung der allgemeinen Formel Ib

$$R^3{-}O{-}\overset{\overset{O}{\uparrow}}{\underset{\underset{OM^2}{|}}{P}}{-}OM^2 \qquad \text{(Ib) und}$$

b) 2 - 15 Gewichtsteile, vorzugsweise 5 - 10 Gewichtsteile, einer Verbindung der allgemeinen Formel IIa und/oder IIb

$R^4-COOM^3$ (IIa); $R^4-SO_3M^3$ (IIb) und/oder

c) 0,5 bis 10 Gewichtsteile, vorzugsweise 0,5 bis 5 Gewichtsteile, einer Verbindung der allgemeinen Formel III

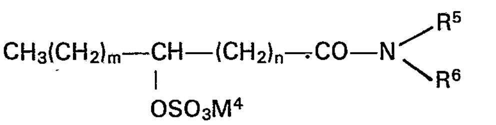
(III)

wobei in den Formeln I bis III die Reste $R^1$, $R^2$, $R^3$, $R^4$, $R^5$ und $R^6$ sowie $M^1$ bis $M^4$, m und n die oben angegebenen Bedeutungen haben, mit der diese Bestandteile auf 100 Gewichtsteile ergänzenden Wassermenge homogenisiert.

Für den Fall, dass eine bevorzugte emulgatorhaltige erfindungsgemässe Trennmittelzubereitung hergestellt werden soll, werden unter entsprechender Reduzierung der Wassermenge zusätzlich bis 10 Gewichtsteile eines nichtionischen Dispergiermittels der allgemeinen Formel V

$$B-(OCH_2-\underset{R^8}{\underset{|}{CH}})_p-OH \qquad (V)$$

worin B, $R^8$ und p die oben angegebenen Bedeutungen haben, in die Zubereitung eingearbeitet.

Die Homogenisierung der Bestandteile der erfindungsgemässen internen Trennmittel wird in an sich üblicher Weise vorgenommen. Zur Herstellung bevorzugter emulgatorhaltiger Trennmittelzubereitungen geht man beispielsweise in der Weise vor, dass man die Mischung aus der erforderlichen Wasser- und Emulgatormenge zunächst durch Schnellrühren bei Temperaturen zwischen 20 und 80°C homogenisiert und in diese Emulgator-Wasser-Mischung unter ständiger kräftiger Durchmischung die übrigen Zubereitungsbestandteile allmählich zusetzt.

Die zur Herstellung der erfindungsgemässen Trennmittelzubereitungen erforderlichen Wirkstoffkomponenten und Emulgatoren der Formeln I bis IV sind im Prinzip bekannt und werden nach bekannten Verfahren hergestellt. Viele von Ihnen sind gängige Handelsprodukte.

Die folgenden Ausführungsbeispiele veranschaulichen die Erfindung und ihre Anwendung und zeigen die wertvollen technischen Eigenschaften der erfindungsgemässen Trennmittel.

Alle Prozentangaben beziehen sich auf Gewicht; der in den Beispielen wiederholt genannte Kitontest wird bei Schichtstoffen wie folgt durchgeführt:
Die Hälfte des zu prüfenden Materials wird 10 Minuten in eine kochende Lösung folgender Zusammensetzung eingebracht:
1 Liter Wasser, 5 ml konzentrierte Schwefelsäure, 1 ml einer 2%igen wässrigen Lösung von Acid Red 45 (C.I.).

Danach wird der Grad der Einfärbung mit einer sechsstufigen Skala verglichen, nach welcher Stufe 1 keine Färbung, Stufe 6 eine erhebliche Färbung anzeigt. Stufe 1 bedeutet eine einwandfreie Aushärtung, und die Stufe 6 ist einer ungenügenden Aushärtung zuzuordnen.

Bei beschichteten Spanplatten wird der Kitontest wie folgt durchgeführt:
1 ml einer Lösung der folgenden Zusammensetzung: 20 ml konzentrierte Schwefelsäure, 20 ml einer 25%igen wässrigen Lösung von Acid Red 45 (C.I.) wird auf die zu prüfende Oberfläche aufgebracht und mit einem Uhrglas bedeckt. Nach 2 Stunden wird der Grad der Anfärbung mit der obenerwähnten sechsstufigen Skala beurteilt.

*Beispiel 1*

In 72 Gewichtsteile Wasser werden unter ständigem kräftigen Rühren bei 50°C 7,2 Gewichtsteile Di-2-äthylhexylphosphat-Morpholinsalz, 4,8 Gewichtsteile Mono-2-äthylhexylphosphat-Morpholinsalz, 6 Gewichtsteile Laurinsäure-Morpholinsalz und 10 Gewichtsteile einer Verbindung der Formel

$$CH_3-(CH_2)_7-\underset{OSO_3Na}{\underset{|}{CH}}-(CH_2)_8-CON(C_4H_9\text{-}n)_2$$

eigetragen, 15 Minuten nachgerührt und anschliessend unter Rühren auf Zimmertemperatur abgekühlt.

Das so erhaltene erfindungsgemässe Trennmittel wird wie in den Anwendungsbeispielen angegeben, eingesetzt.

Sein Zusatz zum Harz führt zu keiner Verminderung der Haltbarkeit.

Die oben eingesetzten 7,2 Gewichtsteile Di-2-äthylhexylphosphat-Morpholinsalz und 4,8 Gewichtsteile Mono-2-äthylhexylphosphat-Morpholinsalz können auch als Gemisch vorliegen und gemeinsam gelöst werden.

*Beispiel 2*

In 65 ml Wasser werden 15 Gewichtsteile Di-benzylphosphat-Diglycolaminsalz (Die Kurzbezeichnung «Diglycolamin» wird hier und im folgenden für $\beta$-($\beta$-Hydroxyäthoxy)-äthylamin verwendet.) und 5 Gewichtsteile Mono-benzyl-phosphat-Diglycolaminsalz einzeln oder als Gemisch gelöst und anschliessend 10 Gewichtsteile Laurinsäure-Diglycolaminsalz und 5 Gewichtsteile einer Verbindung der Formel

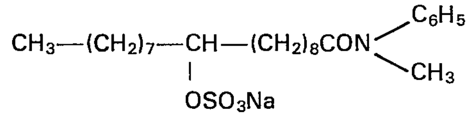

zugesetzt, 15 Minuten bei 50°C nachgerührt und danach unter Rühren auf Zimmertemperatur abgekühlt.

Das so erhaltene erfindungsgemässe Trennmittel wird, wie in den Anwendungsbeispielen angegeben, eingesetzt. Sein Zusatz zum Harz führt zu keiner Verminderung der Haltbarkeit.

*Beispiel 3*

In 82 ml Wasser werden unter kräftigem Rühren bei 40°C 5 Gewichtsteile eines Oxäthylierungsproduktes von 4-Nonylphenol und 10 Mol Äthylenoxid eingetragen und bis zur vollständigen Homogenisierung gerührt. Dann wird bei der gleichen Temperatur unter Homogenisierung ein Gemisch aus 7 Gewichtsteilen Di-2-äthylhexylphosphat-Morpholinsalz und 3 Gewichtsteilen Mono-2-äthylhexylphosphat-Morpholinsalz eingetragen und anschliessend 2 Gewichtsteile N-Methyl-N-oleoyl-aminoessigsäure-Morpholinsalz und 1 Gewichtsteil einer Verbindung der Formel

$CH_3-(CH_2)_7-CH-(CH_2)_8-CON(C_4H_9\text{-}n)_2$
|
$OSO_3Na$

zugesetzt.

Man rührt 15 Minuten bei 40°C nach und lässt dann allmählich unter Rühren auf Zimmertemperatur abkühlen.

Das so erhaltene Trennmittel wird, wie in den Anwendungsbeispielen angegeben, eingesetzt.

Die mit ihm versetzten Harze haben eine sehr gute Haltbarkeit und zeigen eine sehr stark reduzierte Klebneigung bei der Verarbeitung.

Analog den Beispielen 1 bis 3 können auch die in der folgenden Tabelle 1 angegebenen erfindungsgemässen Trennmittelzubereitungen hergestellt werden. In dieser Tabelle haben die für die Einzelkomponenten stehenden Abkürzungen folgende Bedeutungen:

A 1 Di-2-äthylhexylphosphat-Morpholinsalz
A 2 Mono-2-äthylhexylphosphat-Morpholinsalz
A 3 Laurinsäure-Morpholinsalz
A 4 $CH_3-(CH_2)_7-CH-(CH_2)_8-CON(C_4H_9\text{-}n)_2$
|
$OSO_3Na$
B 1 Di-benzylphosphat-Diglycolaminsalz
B 2 Mono-benzylphosphat-Diglycolaminsalz
B 3 Laurinsäure-Diglycolaminsalz
B 4 $CH_3-(CH_2)_7-CH-(CH_2)_8-CON-C_6H_5$
| |
$OSO_3Na$ $CH_3$
C 1 Di-isodecylphosphat-Morpholinsalz
C 2 Mono-isodecylphosphat-Morpholinsalz
C 3 n-Dodecylbenzolsulfonsäure-Morpholinsalz
C 4 $CH_3-(CH_2)_7-CH-(CH_2)_8-CO-N$ ($CH_3$, $CH_3$)
|
$OSO_3Na$
D 1 Di-2-äthylhexylphosphat-Morpholinsalz
D 2 Mono-2-äthylhexylphosphat-Morpholinsalz
D 3 N-Methyl-N-oleoyl-amino-essigsäure-Morpholinsalz
D 4 $CH_3-(CH_2)_7-CH-(CH_2)_8-CON$ ($C_4H_9\text{-}n$, $C_4H_9\text{-}n$)
|
$OSO_3Na$
D 5 4-Nonylphenol + 10 Mole Äthylenoxyd
E 1 Di-2-äthylhexylphosphat-Diglycolaminsalz
E 2 Mono-2-äthylhexylphosphat-Diglycolaminsalz
E 3 β-N-Methyl-N-stearoyl-amino-äthansulfonsäure-Diglycolaminsalz
E 4 $CH_3-(CH_2)_7-CH-(CH_2)_8-CON-$ 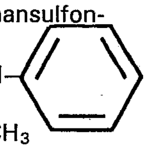
| |
$OSO_3Na$ $CH_3$
E 5 2,4,6-Tri-tert.-butyl-phenol + 11 Mole Äthylenoxyd
F 1 Di-iso-nonyl-phosphat-Morpholinsalz
F 2 Mono-iso-nonyl-phosphat-Morpholinsalz
F 3 β-N-Methyl-N-oleoyl-amino-äthansulfonsäure-Morpholinsalz
F 4 $CH_3-(CH_2)_7-CH-(CH_2)_8-CON$ ($C_4H_9\text{-}n$, $C_4H_9\text{-}n$)
|
$OSO_3Na$
F 5 2,4-Dinonylphenol + 17 Mole Äthylenoxyd
G 1 Di-2-äthylhexylphosphat-Morpholinsalz
G 2 Mono-2-äthylhexylphosphat-Morpholinsalz
G 3 4-Methyl-benzolsulfonsäure-Morpholinsalz
G 4 4-Nonylphenol + 15 Mole Äthylenoxyd
H 1 Di-benzylphosphat-Diglycolaminsalz
H 2 Mono-benzylphosphat-Diglycolaminsalz
H 3 $CH_3-(CH_2)_7-CH-(CH_2)_8-CON$ ($C_4H_9\text{-}n$, $C_4H_9\text{-}n$)
|
$OSO_3Na$
H 4 4-Nonylphenol + 23 Mole Äthylenoxyd
J 1 Di-2-äthylhexylphosphat-Triäthanolaminsalz
J 2 Mono-2-äthylhexylphosphat-Triäthanolaminsalz
J 3 Laurinsäure-Triäthanolaminsalz
J 4 4-Nonylphenol + 15 Mole Äthylenoxyd
K 1 Di-2-isononylphosphat-Morpholinsalz
K 2 Mono-2-äthylhexylphosphat-Morpholinsalz
K 3 n-Dodecylbenzolsulfonsäure-Morpholinsalz
K 4 2,4,6-Tri-tert.-butylphenol + 20 Mole Äthylenoxyd
L 1 Di-benzylphosphat-Kaliumsalz
L 2 Mono-benzylphosphat-Kaliumsalz
L 3 4-Methylbenzolsulfonsäure-Kaliumsalz
L 4 4-Nonylphenol + 10 Mole Äthylenoxyd

In der Spalte «Stabilität» bedeutet + = eine Lagerfähigkeit bei 20°C von ca. 4 Wochen und bei 30°C von ca. 3 Wochen.

In der Spalte «Wirkung» bedeutet + + = Bei Zusatz von 0,5% der betreffenden Zubereitung zum Harz nach 30 Pressungen keine Klebneigung.

*Tabelle 1*

*Trennmittelzubereitungen*

| Beispiel Nr. | Zubereitungs-Komponenten | Konzentration % | Stabile Harzlösung | Wirkung |
|---|---|---|---|---|
| 4 | A 1 | 7,2 | | |
| | A 2 | 4,8 | + | + + |
| | A 4 | 10 | | |
| 5 | A 1 | 20 | | |
| | A 2 | — | + | + + |
| | A 3 | 5 | | |
| | A 4 | 2 | | |
| 6 | A 1 | 10 | | |
| | A 2 | 2 | + | + + |
| | A 3 | 10 | | |
| 7 | A 1 | 5 | | |

(Fortsetzung Tabelle 1)

| Beispiel Nr. | Zubereitungs-Komponenten | Konzentration % | Stabile Harzlösung | Wirkung |
|---|---|---|---|---|
| | A 2 | 5 | + | + + |
| | A 3 | 6 | | |
| | A 4 | 3 | | |
| 8 | A 1 | 10 | | |
| | A 2 | 5 | + | + + |
| | A 3 | 7 | | |
| | A 4 | 8 | | |
| 9 | B 1 | 10 | | |
| | B 2 | 7 | | |
| | B 3 | 0 | + | + + |
| | B 4 | 1 | | |
| 10 | C 1 | 10 | | |
| | C 2 | 2 | + | + + |
| | C 3 | 15 | | |
| | C 4 | 1 | | |
| 11 | C 1 | 15 | | |
| | C 2 | 15 | + | + + |
| | C 3 | 15 | | |
| | C 4 | 10 | | |
| 12 | D 1 | 10 | | |
| | D 2 | 7 | | |
| | D 3 | 0 | + | + + |
| | D 4 | 1 | | |
| | D 5 | 0 | | |
| 13 | E 1 | 16 | | |
| | E 2 | 0 | | |
| | E 3 | 2 | + | + + |
| | E 4 | 1 | | |
| | E 5 | 4 | | |
| 14 | E 1 | 10 | | |
| | E 2 | 1 | | |
| | E 3 | 3 | + | + + |
| | E 4 | 10 | | |
| | E 5 | 0 | | |
| 15 | F 1 | 7 | | |
| | F 2 | 5 | | |
| | F 3 | 6 | + | + + |
| | F 4 | 10 | | |
| | F 5 | 0 | | |
| 16 | F 1 | 5 | | |
| | F 2 | 3 | | |
| | F 3 | 3 | + | + + |
| | F 4 | 3 | | |
| | F 5 | 2 | | |
| 17 | G 1 | 15 | | |
| | G 2 | 5 | | |
| | G 3 | 2 | + | + + |
| | G 4 | 1 | | |
| 18 | G 1 | 10 | | |
| | G 2 | 3 | | |

(Fortsetzung Tabelle 1)

| Beispiel Nr. | Zubereitungs-Komponenten | Konzentration % | Stabile Harzlösung | Wirkung |
|---|---|---|---|---|
| | G 3 | 4 | + | + + |
| | G 4 | 10 | | |
| 19 | H 1 | 8 | | |
| | H 2 | 4 | | |
| | H 3 | 5 | + | + + |
| | H 4 | 5 | | |
| 20 | H 1 | 10 | | |
| | H 2 | 10 | + | + + |
| | H 3 | 1 | | |
| | H 4 | 10 | | |
| 21 | J 1 | 20 | | |
| | J 2 | 0 | + | + + |
| | J 3 | 4 | | |
| | J 4 | 1 | | |
| 22 | J 1 | 5 | | |
| | J 2 | 5 | + | + + |
| | J 3 | 5 | | |
| | J 4 | 5 | | |
| 23 | K 1 | 20 | | |
| | K 2 | 0 | + | + + |
| | K 3 | 4 | | |
| | K 4 | 0 | | |
| 24 | K 1 | 10 | | |
| | K 2 | 5 | + | + + |
| | K 3 | 1 | | |
| | K 4 | 2 | | |
| 25 | L 1 | 8 | | |
| | L 2 | 4 | + | + + |
| | L 3 | 5 | | |
| | L 4 | 10 | | |
| 26 | L 1 | 10 | | |
| | L 2 | 3 | + | + + |
| | L 3 | 5 | | |
| | L 4 | 1 | | |

*Anwendungsbeispiel 1*

Die Lösung eines in üblicher Weise hergestellten modifizierten Melaminharzes im Mol-Verhältnis von Melamin zu Formaldehyd von 1 : 1,8 mit einem Trockengehalt von ca. 55% und einer Wasserverdünnbarkeit von 1 : 1,5 wird mit 0,5% eines Härtungsbeschleunigers auf Basis Morpholin-p-toluolsulfonat versetzt und auf eine Gelierzeit (140°C im Druckrohr) von 70 - 80 s eingestellt.

Anschliessend wird die Melamin-Tränkharzlösung in 9 Proben aufgeteilt, wovon die Proben 1 bis 4 mit einem der Zusätze 0,1 Gew.-%; 0,25 Gew.-%; 0,5 Gew.-% und 1 Gew.-% des Trennmittels gemäss Beispiel 1, die Proben 5 bis 8 mit einem der Zusätze 0,1 Gew.-%; 0,25 Gew.-%; 0,5 Gew.-% und 1 Gew.-% des Trennmittels gemäss Beispiel 2 versetzt werden.

Die Probe 9 wird als Vergleich ohne Trennmittelzusatz gelassen. Ein bedrucktes, saugfähiges Dekorpapier («Kiefer-hell») mit einem Rohgewicht von 80 $g/m^2$ wird mit den Harzlösungen so imprägniert, dass die Trägerbahn ein Flächengewicht von 185 bis 195 $g/m^2$ und eine Restfeuchte (Darrwert) von 6 bis 7% aufweist.

Das Aufpressen der Papiere auf eine ca. 680 $kg/m^3$ schwere Spanplatte erfolgt in einer Einetagenpresse unter folgenden sogenannten Kurztakt-Bedingungen.

Auflagezeit bis zum Erreichen des vollen Pressdrucks ca. 5 s, Presszeit: 38 s, Presstemperatur, gemessen am imprägnierten Film: ca. 148°C, Pressdruck: ca. 20 bar. Vor dem Entformen erfolgt keine Rückkühlung.

Als Pressblech wird

a) ein strukturiertes hartverchromtes Messingblech und

b) ein stumpfmattes verchromtes Edelstahlblech eingesetzt.

Geprüft wird die Entformbarkeit der beschichteten Spanplatte vom Pressblech sowie der Aushärtungsgrad der Plattenoberfläche nach dem Kiton-Test. Beurteilt wird Säureangriff und Farbstoffaufzug nach einer Prüfdauer von 2 Stunden anhand einer sechsstufigen Bewertungsskala von 1 bis 6, wobei Stufe 1 «kein Angriff» bedeutet. Für die Beispiele 1 bis 9 wird eine Anfärbestufe 2 «schwache Anfärbung» eingestellt, was einem optimalen Aushärtungsgrad, d.h. keiner Überhärtung, entspricht.

*Ergebnisse:*

*1. Strukturiertes Messingblech*

*1.1 Trennmittel gemäss Beispiel 1*

| *Zusatzmengen:* | *Beurteilung der Klebneigung am Pressblech:* |
|---|---|
| 0,1% | nach 20 Pressungen leichte, nach 30 Pressungen deutliche Klebneigung |
| 0,25% | nach 30 Pressungen leichte Klebneigung |
| 0,5%<br>1,0% | auch nach 30 Pressungen kein Anhaften |

*1.2 Trennmittel gemäss Beispiel 2*

| *Zusatzmengen:* | *Beurteilung der Klebneigung am Pressblech* |
|---|---|
| 0,1%<br>0,25%<br>0,5%<br>1,0% | Beurteilung wie unter 1.1 |

*1.3 Vergleichsmuster ohne Trennmittel:*

nach 8 - 10 Pressungen leichte, nach 12 Pressungen deutliche Klebneigung

*2. Verchromtes Edelstahlblech*

*2.1 Trennmittel gemäss Beispiel 1*

| *Zusatzmengen:* | *Beurteilung der Klebneigung am Pressblech* |
|---|---|
| 0,1% | nach 12 Pressungen leichte bis deutliche Klebneigung |
| 0,25% | nach 25 Pressungen leichte bis deutliche Klebneigung |
| 0,5%<br>1,0% | nach 30 Pressungen keine Klebneigung |

*2.2 Trennmittel gemäss Beispiel 2*

| *Zusatzmengen:* | *Beurteilung der Klebneigung am Pressblech* |
|---|---|
| 0,1%<br>0,25%<br>0,5%<br>1,0% | Beurteilung wie unter 2.1 |

*2.3 Vergleichsmuster ohne Trennmittel*

nach 5 Pressungen deutliche Klebneigung

*Anwendungsbeispiel 2*

70 Gewichtsteile des bereits beschriebenen modifizierten Melamintränkharzes werden mit 30 Gewichtsteilen eines handelsüblichen Harnstoff-Formaldehyd-Tränkharzes (Trockengehalt ca. 50%) gemischt und mit 0,7% eines Härtungsbeschleunigers auf Basis Morpholin-p-toluolsulfonat versetzt und auf eine Gelierzeit (bei 140°C im Druckrohr) von 70 - 80 s eingestellt. Anschliessend wird diese Tränkharz-Lösung in 3 Proben aufgeteilt, wovon die Proben 1 und 2 mit einem der Zusätze 0,25 Gew.-% und 0,5 Gew.-% des Trennmittels gemäss Beispiel 1 versetzt wurden. Die Probe 3 wird als Vergleich ohne Trennmittelzusatz gelassen. Ein weisses, pigmentiertes, saugfähiges Edelzellstoffpapier mit einem Rohgewicht von ca. 100 $g/m^2$ wird mit den Harzlösungen so imprägniert, dass die Trägerbahn ein Flächengewicht von 230 bis 240 $g/m^2$ und eine Restfeuchte von 6 - 7% aufweist.

Das Aufpressen der Papiere auf eine ca. 680 $kg/m^3$ schwere Spanplatte erfolgt in einer Einetagenpresse unter folgenden sogenannten Kurztakt-Bedingungen:

Auflagezeit bis zum Erreichen des vollen Pressdrucks: ca. 5 s, Presszeit: 38 s, Presstemperatur, gemessen am imprägnierten Film: ca. 148°C, Pressdruck: ca. 20 bar. Vor dem Entformen erfolgt keine Rückkühlung.

Als Pressblech wird

a) ein strukturiertes hartverchromtes Messingblech und

b) ein stumpfmattes verchromtes Edelstahlblech eingesetzt.

Geprüft wird die Entformbarkeit der beschichteten Spanplatte vom Pressblech sowie der Aushärtungsgrad der Plattenoberfläche nach dem Kiton-Test.

Wie beim Anwendungsbeispiel 1 wird auch hier die Anfärbestufe 2 «schwache Anfärbung» entsprechend dem optimalen Aushärtungsgrad, keine Überhärtung, eingestellt.

*Ergebnisse:*

*1. Strukturiertes Messingpressblech*

| *Zusatzmenge:* | *Beurteilung der Klebneigung am Pressblech* |
|---|---|
| 0,25% | nach 15 Pressungen leichte Klebneigung |

| | |
|---|---|
| 0,5% | nach 30 Pressungen keine Klebneigung |
| Vergleichsmuster ohne Trennmittel: | nach 5 Pressungen deutliche Klebneigung |

*2. Verchromtes Edelstahlpressblech*

| *Zusatzmenge:* | *Beurteilung der Klebneigung am Pressblech* |
|---|---|
| 0,25% | nach 10 Pressungen leichte Klebneigung |
| 0,5% | nach 30 Pressungen keine Klebneigung |
| Vergleichsmuster ohne Trennmittel: | nach 3 Pressungen deutliche Klebneigung |

**Patentansprüche**

1. Internes Trennmittel für hitzehärtbare Aminoplastharze bestehend aus einer wässrigen Lösung oder Dispersion enthaltend
a) 5 - 30 Gew.-% eines Gemisches aus 50 - 100 Gew.-% einer Verbindung der allgemeinen Formel Ia

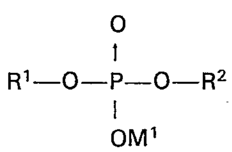

(Ia) und

0 bis 50 Gew.-% einer Verbindung der allgemeinen Formel Ib

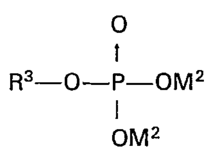

(Ib) und

b) 2 - 15 Gew.-% einer Verbindung der allgemeinen Formel IIa und/oder IIb

$R^4$—$COOM^3$ (IIa); $R^4$—$SO_3M^3$ (IIb) und/oder

c) 0,5 bis 10 Gew.-% einer Verbindung der allgemeinen Formel III

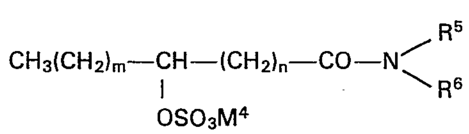

(III)

wobei in den Formeln Ia bis III
$R^1$, $R^2$ und $R^3$ unabhängig voneinander geradkettiges oder verzweigtes Alkyl oder Alkenyl mit 5 bis 12 C-Atomen oder Phenalkyl oder Naphthalkyl mit 7 - 13 C-Atomen, $R^4$ Alkyl mit 10 bis 22 C-Atomen, Alkylphenyl oder Alkylnaphthyl mit 1 bis 12 C-Atomen in der Alkylkette oder ein Rest der Formel IV

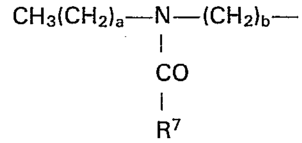

(IV)

worin a eine Zahl von 0 bis 2, b eine Zahl von 1 bis 3 ist und a + b eine Zahl von 1 bis 3 ergibt, $R^5$ Alkyl oder Alkenyl mit 1 bis 8 C-Atomen, Phenyl, Alkylphenyl oder Phenalkyl mit jeweils 1 bis 4 C-Atomen in der Alkylkette, $R^6$ Wasserstoff oder einen der für $R^5$ genannten Reste und $R^7$ Alkyl mit 11 bis 20 C-Atomen, $M^1$ bis $M^4$ gleich oder verschieden sind und ein Alkalikation oder ein alkaliäquivalentes Kation bedeuten, eines der zwei Symbole $M^2$ zusätzlich auch Wasserstoff bedeutet und m und n unabhängig voneinander Zahlen von 6 bis 8 sind.

2. Internes Trennmittel gemäss Anspruch 1, dadurch gekennzeichnet, dass es zusätzlich 1 bis 10 Gew.-% eines nichtionischen Dispergiermittels der allgemeinen Formel V

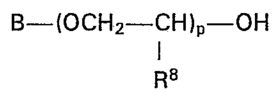

(V),

enthält, worin B Alkylphenyl mit 9 bis 18 C-Atomen in den Alkylresten, Naphthyl, Hydroxydiphenyl oder Benzyl- oder Phenäthyl-diphenyl, $R^8$ Wasserstoff oder Methyl und p eine Zahl von 5 bis 25 ist.

3. Internes Trennmittel gemäss den Ansprüchen 1 und 2, dadurch gekennzeichnet, dass es 10 bis 15 Gew.-% eines Gemisches aus den Verbindungen der Formeln Ia und Ib enthält.

4. Internes Trennmittel gemäss den Ansprüchen 1 bis 3, dadurch gekennzeichnet, dass es 5 - 10 Gew.-% einer Verbindung der allgemeinen Formeln IIa oder IIb enthält.

5. Internes Trennmittel gemäss den Ansprüchen 1 bis 4, dadurch gekennzeichnet, dass es gegebenenfalls 0,5 bis 5 Gew.-% einer Verbindung der allgemeinen Formel III enthält.

6. Internes Trennmittel gemäss den Ansprüchen 1 bis 5, dadurch gekennzeichnet, dass es eine Verbindung der allgemeinen Formel III enthält, worin die Summe m + n = 15 ist.

7. Verfahren zur Herstellung eines internen Trennmittels für hitzehärtbare Aminoplastharze, dadurch gekennzeichnet, dass man zur Herstellung von 100 Gewichtsteilen des Mittels
a) 5 - 30 Gewichtsteile eines Gemisches aus 50 - 100 Gew.-% einer Verbindung der allgemeinen Formel Ia

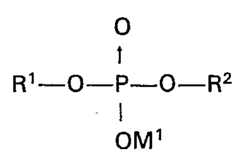

(Ia) und

0 bis 50 Gew.-% einer Verbindung der allgemeinen Formel Ib

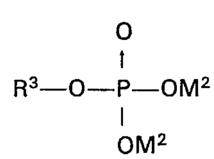

(Ib) und

b) 2 - 15 Gewichtsteile einer Verbindung der allgemeinen Formel IIa und/oder IIb

$R^4{-}COOM^3$ (IIa); $R^4{-}SO_3M^3$ (IIb) und/oder

c) 0,5 bis 10 Gewichtsteile einer Verbindung der allgemeinen Formel III

$$\begin{array}{l} CH_3(CH_2)_m{-}\underset{\displaystyle OSO_3M^4}{\underset{|}{CH}}{-}(CH_2)_n{-}CO{-}N\begin{array}{l}\nearrow R^5\\ \searrow R^6\end{array} \end{array} \qquad (III)$$

wobei in den Formeln Ia bis III die Reste $R^1$, $R^2$, $R^3$, $R^4$, $R^5$ und $R^6$ sowie $M^1$ bis $M^4$, m und n die in Anspruch 1 oder 6 angegebenen Bedeutungen haben, mit der diese Bestandteile auf 100 Gewichtsteile ergänzenden Wassermenge homogenisiert.

8. Verfahren gemäss Anspruch 7, dadurch gekennzeichnet, dass man zusätzlich 1 bis 10 Gewichtsteile eines nichtionischen Dispergiermittels der allgemeinen Formel V

$$B{-}(OCH_2{-}\underset{\displaystyle R^7}{\underset{|}{CH}})_p{-}OH \qquad (V),$$

worin B, $R^7$ und p die im Anspruch 2 angegebenen Bedeutungen haben, unter entsprechender Reduzierung der Wassermenge mithomogenisiert.

9. Verfahren gemäss Anspruch 7 und/oder 8, dadurch gekennzeichnet, dass man bei der Homogenisierung 10 bis 15 Gewichtsteile des Gemisches der Verbindungen der Formeln Ia und Ib und/oder 5 bis 10 Gewichtsteile einer Verbindung der Formel IIa oder IIb und/oder 0,5 bis 5 Gewichtsteile einer Verbindung der Formel III verwendet.

10. Verwendung des internen Trennmittels der Ansprüche 1 bis 6 als Zusatz zu hitzehärtbaren Aminoplastharzen zur Verbesserung der Entformbarkeit bei der Herstellung von Schichtpressstoffen und beschichteten Holzwerkstoffen.

**Revendications**

1. Agent de démoulage interne pour résines aminoplastes thermodurcissables, composé d'une solution ou d'une dispersion aqueuse contenant
a) 5 - 30% en poids d'un mélange de 50 - 100% en poids d'un composé de formule générale Ia

$$R^1{-}O{-}\overset{\displaystyle O}{\overset{\uparrow}{\underset{\displaystyle OM^1}{\underset{|}{P}}}}{-}O{-}R^2 \qquad (Ia)$$

et 0 à 50% en poids d'un composé de formule générale Ib

$$R^3{-}O{-}\overset{\displaystyle O}{\overset{\uparrow}{\underset{\displaystyle OM^2}{\underset{|}{P}}}}{-}OM^2 \qquad (Ib) \text{ et}$$

b) 2 - 15% en poids d'un composé de formule générale IIa et/ou IIb

$R^4{-}COOM^3$ (IIa); $R^4{-}SO_3M^3$ (IIb) et/ou

c) 0,5 - 10% en poids d'un composé de formule générale III

$$\begin{array}{l} CH_3(CH_2)_m{-}\underset{\displaystyle OSO_3M^4}{\underset{|}{CH}}{-}(CH_2)_n{-}CO{-}N\begin{array}{l}\nearrow R^5\\ \searrow R^6\end{array} \end{array} \qquad (III)$$

où, dans les formules Ia à III, $R^1$, $R^2$ et $R^3$ sont, indépendamment les uns des autres, des radicaux alkyle ou alcényle à chaîne droite ou ramifiée à 5 à 12 atomes de carbone ou phénalkyle ou naphtalkyle à 7-13 atomes de carbone, $R^4$ est un radical alkyle à 10 à 22 atomes de carbone, alkylephényle ou alkylnaphthyle à 1 à 12 atomes de carbone dans la chaîne alkyle ou un radical de formule IV

$$CH_3(CH_2)_a{-}\underset{\displaystyle R^7}{\underset{|}{\underset{\displaystyle CO}{\underset{|}{N}}}}{-}(CH_2)_b{-} \qquad (IV)$$

où a est un nombre compris entre 0 et 2, b un nombre compris entre 1 et 3 et a + b est un nombre compris entre 1 et 3, $R^5$ est un radical alkyle ou alcényle à 1 à 8 atomes de carbone, phényle, alkylphényle ou phénalkyle ayant chaque fois 1 à 4 atomes de carbone dans la chaîne alkyle, $R^6$ est l'hydrogène ou l'un des radicaux mentionnés pour $R^5$ et $R^7$ est un radical alkyle à 11 à 20 atomes de carbone, $M^1$ à $M^4$ sont identiques ou différents et sont un cation alcalin ou un cation équivalent à un cation alcalin, l'un des deux symboles $M^2$ étant en outre aussi l'hydrogène, et m et n étant, indépendamment l'un de l'autre, un nombre compris entre 6 et 8.

2. Agent de démoulage interne selon la revendication 1, caractérisé en ce qu'il contient en outre 1 à 10% en poids d'un dispersant non-ionique de formule générale V

$$B{-}(OCH_2{-}\underset{\displaystyle R^8}{\underset{|}{CH}})_p{-}OH \qquad (V)$$

où B est un radical alkylphényle à 9 à 18 atomes de carbone dans les groupes alkyle, naphtyle, hydroxydiphényle ou benzyl- ou phénéthyl-diphényle, $R^8$ est l'hydrogène ou le radical méthyle et p est un nombre compris entre 5 et 25.

3. Agent de démoulage interne selon l'une quelconque des revendications 1 ou 2, caractérisé en ce qu'il contient 10 à 15% en poids d'un mélange des composés des formules Ia et Ib.

4. Agent de démoulage interne selon l'une quelconque des revendications 1 à 3, caractérisé en ce qu'il contient 5 à 10% en poids d'un composé de formules générales IIa ou IIb.

5. Agent de démoulage interne selon l'une quelconque des revendications 1 à 4, caractérisé en ce

qu'il contient éventuellement 0,5 à 5% en poids d'un composé de formule générale III.

6. Agent de démoulage interne selon l'une quelconque des revendications 1 à 5, caractérisé en ce qu'il contient un composé de formule générale III où la somme m+n = 15.

7. Procédé de préparation d'un agent de démoulage interne pour résines aminoplastes thermodurcissables, caractérisé en ce que, pour préparer 100 parties en poids de l'agent, on homogénéise
a) 5 - 30 parties en poids d'un mélange de 50-100% en poids d'un composé de formule générale Ia

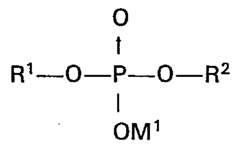
(Ia) et

0 à 50% en poids d'un composé de formule générale Ib

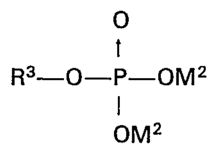
(Ib) et

b) 2 - 15 parties en poids d'un composé de formule générale IIa et/ou IIb

$R^4—COOM^3$ (IIa); $R^4—SO_3M^3$ (IIb) et/ou

c) 0,5 à 10 parties en poids d'un composé de formule générale III

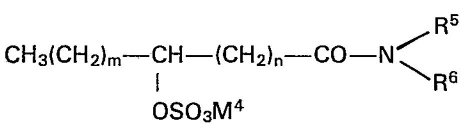
(III)

où dans les formules Ia à III, les radicaux $R^1$, $R^2$, $R^3$, $R^4$, $R^5$ et $R^6$, de même que $M^1$ à $M^4$, m et n, ont la signification donnée dans les revendications 1 ou 6, avec la quantité d'eau complétant ces constituants à 100 parties en poids.

8. Procédé selon la revendication 7, caractérisé en ce que l'on homogénéise de plus, simultanément, 1 à 10 parties en poids d'un dispersant non-ionique de formule générale V

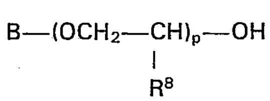
(V)

où B, $R^8$ et p ont la signification donnée dans la revendication 2, sous réduction correspondante de la quantité d'eau.

9. Procédé selon l'une quelconque des revendications 7 ou 8, caractérisé en ce que l'on utilise lors de l'homogénéisation 10 à 15 parties en poids du mélange des composés de formules Ia et Ib et/ou 5 à 10 parties en poids d'un composé de formules IIa ou IIb et/ou 0,5 à 5 parties en poids d'un composé de formule III.

10. Utilisation de l'agent de démoulage interne selon l'une quelconque des revendications 1 à 6 en tant qu'additif à des résines aminoplastes thermodurcissables pour améliorer l'aptitude au démoulage lors de la fabrication de matériaux stratifiés et de matériaux enduits dérivés du bois.

**Claims**

1. Internal release agent for thermosetting aminoplast resins, consisting of an aqueous solution or dispersion containing
a) 5 - 30% by weight of a mixture of 50 - 100% by weight of a compound of the general formula Ia

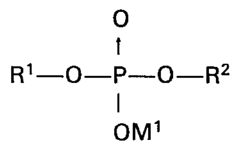
(Ia)

and 0 to 50% by weight of a compound of the general formula Ib

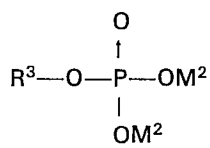
(Ib)

and
b) 2 - 15% by weight of a compound of the general formula IIa and/or IIb

$R^4—COOM^3$ (IIa); $R^4—SO_3M^3$ (IIb) and/or

c) 0.5 to 10% by weight of a compound of the general formula III

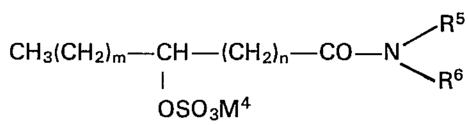
(III)

wherein, in the formulae Ia to III, $R^1$, $R^2$ and $R^3$ independently of one another denote straight-chain or branched alkyl or alkenyl with 5 to 12 C atoms or phenalkyl or naphthalkyl with 7 - 13 C atoms, $R^4$ denotes alkyl with 10 to 22 C atoms, alkylphenyl or alkylnaphthyl with 1 to 12 C atoms in the alkyl chain or a radical of the formula IV

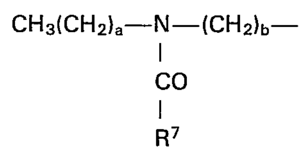
(IV)

wherein a is a number from 0 to 2, b is a number from 1 to 3 and a+b gives a number from 1 to 3, $R^5$ denotes alkyl or alkenyl with 1 to 8 C atoms, phenyl or alkylphenyl or phenalkyl with in each case 1 to 4 C atoms in the alkyl chain, $R^6$ denotes hydrogen or one of the radicals mentioned for $R^5$, $R^7$ denotes

alkyl with 11 to 20 C atoms, $M^1$ to $M^4$ are identical or different and denote an alkali metal cation or a cation equivalent to an alkali metal and one of the two symbols $M^2$ additionally also denotes hydrogen, and m and n independently of one another are numbers from 6 to 8.

2. Internal release agent according to claim 1, characterised in that it additionally contains 1 to 10% by weight of a non-ionic dispersing agent of the general formula V

$$B-(OCH_2-\underset{\displaystyle R^8}{\underset{|}{CH}})_p-OH \qquad (V)$$

wherein B is alkylphenyl with 9 to 18 C atoms in the alkyl radicals, naphthyl, hydroxydiphenyl or benzyl- or phenethyl-diphenyl, $R^8$ is hydrogen or methyl and p is a number from 5 to 25.

3. Internal release agent according to claims 1 and 2, characterised in that it contains 10 to 15% by weight of a mixture of the compounds of the formulae Ia and Ib.

4. Internal release agent according to claims 1 to 3, characterised in that it contains 5 - 10% by weight of a compound of the general formula IIa or IIb.

5. Internal release agent according to claims 1 to 4, characterised in that it optionally contains 0.5 to 5% by weight of a compound of the general formula III.

6. Internal release agent according to claims 1 to 5, characterised in that it contains a compound of the general formula III wherein the sum of m and n is 15.

7. Process for the preparation of an internal release agent for thermosetting aminoplast resins, characterised in that, for the preparation of 100 parts by weight of the agent,

a) 5 - 30 parts by weight of a mixture of 50 - 100% by weight of a compound of the general formula Ia

$$R^1-O-\overset{\displaystyle O}{\overset{\uparrow}{\underset{\displaystyle OM^1}{\underset{|}{P}}}}-O-R^2 \qquad (Ia)$$

and 0 to 50% by weight of a compound of the general formula Ib

$$R^3-O-\overset{\displaystyle O}{\overset{\uparrow}{\underset{\displaystyle OM^2}{\underset{|}{P}}}}-OM^2 \qquad (Ib)$$

and

b) 2 - 15 parts by weight of a compound of the general formula IIa and/or IIb

$R^4-COOM^3$ (IIa); $R^4-SO_3M^3$ (IIb) and/or

c) 0.5 to 10 parts by weight of a compound of the general formula III

$$CH_3(CH_2)_m-\underset{\displaystyle OSO_3M^4}{\underset{|}{CH}}-(CH_2)_n-CO-N\begin{matrix}\nearrow R^5\\ \searrow R^6\end{matrix} \qquad (III)$$

wherein, in the formulae Ia to III, the radicals $R^1$, $R^2$, $R^3$, $R^4$, $R^5$ and $R^6$ and $M^1$ to $M^4$ m and n have the meanings given in claim 1 or 6, are homogenised with the amount of water required to make these constituents up to 100 parts by weight.

8. Process according to claim 7, characterised in that 1 to 10 parts by weight of a non-ionic dispersing agent of the general formula V

$$B-(OCH_2-\underset{\displaystyle R^8}{\underset{|}{CH}})_p-OH \qquad (V)$$

wherein B, $R^8$ and p have the meanings given in claim 2, are also additionally homogenised with the mixture, the amount of water being correspondingly reduced.

9. Process according to claim 7 and/or 8, characterised in that in the homogenisation 10 to 15 parts by weight of the mixture of the compounds of formulae Ia and Ib and/or 5 to 10 parts by weight of a compound of formulae IIa or IIb and/or 0.5 to 5 parts by weight of a compound of formula III are employed.

10. Use of the internal release agent of claims 1 to 6 as an additive to thermosetting aminoplast resins, for improving the ease of release from the mould in the production of moulded laminates and coated timber products.